# EUROPÄISCHE PATENTSCHRIFT

(11) **EP 1 857 351 B1**
(45) Veröffentlichungstag und Bekanntmachung des Hinweises auf die Patenterteilung: **11.01.2012**
(21) Anmeldenummer: 07009895.9
(22) Anmeldetag: 18.05.2007
(51) Int. Cl.: B62D 25/06, B62D 65/06

(54) **Kraftfahrzeugkarosserie mit schmaler Dachfuge**
Body of an automotive vehicle exhibiting thin joints in the roof
Carrosserie de véhicule automobile montrant de faibles jeux au niveau du toit

(30) Priorität: 20.05.2006 DE 102006023802
(43) Veröffentlichungstag der Anmeldung: 21.11.2007
(73) Patentinhaber: GM Global Technology Operations LLC, Detroit, MI 48265-3000 (US)
(72) Erfinder: Kraus, Georg, 63110 Rodgau (DE); Stahlhut, Richard, 63075 Offenbach (DE); Stever, Tobias, 64390 Erzhausen (DE)
(74) Vertreter: Daniel, Ulrich W.P.

(56) Entgegenhaltungen:
- EP-A- 1 086 882
- EP-A- 1 180 471
- EP-A- 1 428 742
- WO-A-2004/048154
- DE-A1- 10 156 350
- DE-A1- 10 200 750
- DE-A1- 10 318 345

## Beschreibung

Die Erfindung betrifft ein Verfahren zur Herstellung eines Kraftfahrzeugdachs.

Bei herkömmlichen Dachkonstruktionen verfügt das Kraftfahrzeug über eine geschlossene Dachhaut aus Blech, die seitlich an den Dachrahmen angebunden ist. Soll das Fahrzeug mit einem Schiebedach, einem Sonnendach, einem Hebedach, einem Sonnen-/Schiebedach oder dergleichen ausgestattet werden, so muss in dieser Dachhaut eine Öffnung eingebracht und dort das Dachöffnungssystem mit allerlei Zusatzaufwand montiert werden.

Die DE 10355656 A1 offenbart eine Kraftfahrzeugkarosserie mit zwei A-, B- und C-Säulen, die an ihren oberen Enden mit Strukturbauteilen verbunden sind. Die Strukturbauteile sind miteinander zu einem dachtragenden Rahmen verbunden. Auf den dachtragenden Rahmen ist ein Adapterträger aufgesetzt und mit diesem befestigt. Der Adapterträger dient zum Aufnehmen von Dachfenstern, Schiebedächern, Dachöffnungssystemen und/oder Dachmodulvarianten in diesen Adapterträger. Gemäß der DE 10355656 A1 wird damit die Aufgabe gelöst, eine Kraftfahrzeugkarosserie mit einer erhöhten Gestaltungsfreiheit bezüglich der Dachgestaltung zu erhalten, die sich bereits im Kraftfahrzeugherstellungsprozess ohne großen zusätzlichen Aufwand mit einem Dachmodul ausstatten lässt.

Die Druckschriften DE 10318345 A1, DE 10200750 A1, DE 10156350 A1 und EP-A-1180471 zeigen jeweils eine Kraftfahrzeugkarosserie mit Hochstreben, die an ihren oberen Enden mit einem dachtragende Rahmen verbunden sind, sowie mit einem auf den Rahmen aufgesetzten Adapterträger und einem im Adapterträger aufgenommenen Dachmodul. Die Druckschrift EP-A-1086882 beschreibt ein gattungsgemäßes Verfahren zum Einbauen eines solchen Dachmoduls in den Adapterträger, bei dem ein elastisches Profil am Dachmodul festgeklebt wird. Weiterer Stand der Technik kann EP-A-1428742 entnommen werden.

Die vorliegende Erfindung betrifft die Herstellung einer Kraftfahrzeugkarosserie, die einen dachtragenden Rahmen mit einem aufgesetzten Adapterträger besitzt. Eine Ausführungsform stellt hierbei eine konstruktiv vereinfachte Dachkonstruktion bereit.

Bei der genannten Ausführungsform der Kraftfahrzeugkarosserie sind Hochstreben vorgesehen, die an ihren oberen Enden mit einem dachtragenden Rahmen verbunden sind. Auf diesen Rahmen ist ein Adapterträger mit zumindest teilweise in ihm aufgenommenen Dachmodul aufgesetzt. Zwischen einem Dachmodulaußenflansch und einem zugeordneten Innenflansch des Adapterträgers verläuft eine in Fahrzeuglängsrichtung verlaufende Fuge mit einer Breite von maximal 5 mm.

Die Dachkonstruktion mit dachtragendem Rahmen und Adapterträger kann zunächst eine solche sein, wie sie in der DE 10355656 A1 beschrieben ist. Der dachtragende Rahmen kann insofern aus Strukturbauteilen bestehen, und zwar mindestens zwei sich in Fahrzeuglängsrichtung erstreckender Strukturbauteile und zweier sich in Fahrzeugquerrichtung verlaufender Strukturbauteile. Die Strukturbauteile sind dann miteinander verbunden und in der Regel miteinander verschweißt.

Der dachtragende Rahmen ist seinerseits mit den oberen Enden der Hochstreben verbunden. In den meisten Fällen handelt es sich bei den Hochstreben um jeweils zwei A-, B- und C-Säulen. Selbstverständlich sind hiervon auch Abweichungen möglich und kann das Fahrzeug beispielsweise nur eine einzige B-Säule besitzen, um ein ästhetisch besonders ansprechendes Design zu bieten.

Der Adapterträger ist eine tragende Struktur, beispielsweise eine Rahmenstruktur, für Dachfenster, Schiebedächer, Dachöffnungssysteme, Sonnendächer, Hebedächer, kombinierte Sonnen-/Schiebedächer oder sonstige Dachöffnungssysteme, die im Rahmen dieser Darstellung als Dachmodule bezeichnet werden. Der Adapterträger ist eine werksseitig entworfene, durchgeplante und für den speziellen Verwendungszweck hin konstruktiv optimierte Aufnahme für das Dachmodul.

Der Adapterträger verfügt über einen abgesenkten Bereich mit einem weitgehend horizontalen Auflageflansch. Bei der Montage wird das Dachmodul von oben kommend in den abgesenkten Bereich abgelassen und kommt dann auf dem Auflageflansch zu liegen. Das derart aufgenommene Dachmodul wird mit dem Adapterträger verbunden. Dies geschieht dadurch, dass vor dem Absenken Klebstoffmassen auf den horizontalen Auflageflansch oder den zugeordneten Teilen des Dachmoduls aufgebracht werden. Optional erfolgt eine weitere Befestigung des Dachmoduls am Adapterträger, beispielsweise mechanisch über Verschraubungen oder über eine Verschweißung.

Die genannte Geometrie bringt es mit sich, dass nach der Montage des Dachmoduls zwischen dem Außenflansch des Dachmoduls einerseits und der innenseitigen Begrenzung des abgesenkten Bereichs des Adapterträgers andererseits eine Fuge vorliegt. Diese innenseitige Begrenzung wird in dieser Darstellung als dem Außenflansch zugeordneter Innenflansch (des Adapterträgers) bezeichnet. Dieser Innenflansch ist in der Regel Teil der zum Adapterträger gehörenden äußeren Seitenwand.

Die Fuge verläuft in Fahrzeuglängsrichtung auf beiden Seiten des Fahrzeugs. Sie kann dabei weitgehend parallel zur Fahrzeuglängsrichtung verlaufen oder aber schräg hierzu. Im letztgenannten Fall kann der Dachbereich vorne breiter als hinten sein, sodass sich das Dach nach hinten verjüngt. Die Fuge verläuft dann von vorne nach hinten zunehmend in Richtung Fahrzeugmitte. Die Fugenbreite ist in allen Fällen vorne und hinten gleich.

Diese Fuge, deren Fugenbreite in Fahrzeugquerrichtung gemessen wird, ist im Vergleich zu vorbekannten Dachkonstruktionen mit dachtragendem Rahmen und Adapterträger kleiner ausgebildet. Die Breite der Fuge ist maximal 5 mm, kann aber auch zwischen etwa 1.5 mm und ca. 4 mm oder sogar zwischen etwa 1.5 mm und ca. 3 mm liegen.

Der Dachmodulaußenflansch und sein zugehöriger Innenflansch können zueinander parallele Flächen sein, sodass die in Fahrzeugquerrichtung gemessene Fugenbreite entlang der Vertikalen konstant ist. Im einfachsten Fall sind dabei die beiden Flansche im Wesentlichen vertikal ausgerichtet. Es ist jedoch auch möglich, der Dachmodulaußenflansch und sein zugehöriger Innenflansch schräg zueinander stehen, wobei beispielsweise einer davon vertikal ausgerichtet ist. Hierbei kann sich die Fuge nach oben oder unten verjüngen und ist die Fugenbreite entlang der Vertikalen nicht konstant. In solchen Fällen, aber auch allgemein, kann die Fugenbreite längs des oberen Fugenrands gemessen werden.

Die Wahl einer derart kleinen Fuge erlaubt es, auf eine optische Kaschierung, beispielsweise in der Form einer Fugenblende, zu verzichten. Dies gilt umso stärker, je schmaler die Fuge ist. Damit wird für das Fahrzeug ein Bauteil weniger benötigt was die Gesamtkonstruktion vereinfacht, Material- und Montagekosten einspart und die Herstellung des Fahrzeugs beschleunigt.

Die Erfindung bezieht sich auf ein Verfahren zur Herstellung einer derartigen Fahrzeugkarosserie bzw. eines Fahrzeugs mit einer derartigen Fahrzeugkarosserie. Eine Ausführungsform des Verfahrens ermöglicht hierbei eine exakte Positionierung des Dachmoduls im Adapterträger.

Die genannte Ausführungsform des Verfahrens dient dem Einbauen eines Dachmoduls in einen Adapterträger, der auf einen dachtragenden Rahmen eines Kraftfahrzeugs aufgesetzt ist. Das Verfahren umfasst einen ersten Schritt des Festklebens eines elastischen Profils auf einen ersten und einen gegenüberliegenden zweiten Außenflansch des Dachmoduls. Alternativ oder kumulativ hierzu wird ein Profil auf einen ersten und einen gegenüberliegenden zweiten Innenflansch des Adapterträgers geklebt, wobei die Innenflansche in Fahrzeuglängsrichtung ausgerichtet sind. In einem zweiten Schritt werden sowohl der erste als auch der zweite Außenflansch in Fahrzeuglängsrichtung ausgerichtet, sodass die Profile auf der linken und rechten Kraftfahrzeugseite angeklebt werden. In einem dritten Schritt wird das Dachmodul in den Adapterträger unter Einklemmen der Profile zwischen den Außenflanschen und dem jeweiligen zugeordneten Innenflansch des Adapterträgers abgesenkt. In einem vierten Schritt werden die Profile nach dem Absenken des Dachmoduls aus der Fuge herausgezogen. Dabei wird die Länge des Profils so gewählt, dass es in Fahrzeuglängsrichtung über das Dachmodul übersteht. Damit ragt ein Teil des Profils aus der Fuge heraus und kann nach dem Festkleben am Adapterträger herausgezogen werden. Der Kleber zum Festkleben des Dachmoduls am Innenflansch wird hierbei so ausgewählt, dass nach dem Abziehen bzw. Entfernen des aufgeklebten Profils keine Rückstände zurückbleiben. Werden die Profile entfernt, so ergibt sich eine Fuge ohne ein optisch störendes Profil.

Das genannte Verfahren ermöglicht mit einfachen Mitteln eine Einbauweise des Dachmoduls im Adapterträger bzw. im abgesenkten Bereich des Adapterträgers, bei der sich das Dachmodul in Fahrzeugquerrichtung selbst zentriert.

Das Dachmodul wird in den meisten Fällen eine rechteckige Form haben, wobei die lange Seite weitgehend parallel zur Fahrzeuglängsrichtung ausgerichtet ist. In einem solchen Fall sind auch die hier relevanten Außenflansche des Dachmoduls weitgehend parallel zur Fahrzeuglängsrichtung ausgerichtet, sodass auf der linken und rechten Fahrzeugseite mindestens ein elastisches Profil auf einem Außenflansch oder einem Innenflansch zu liegen kommt. Jedes Profil drückt das Dachmodul in Fahrzeugquerrichtung vom Innenflansch des Adapterträgers weg. Da auf beiden Seiten des Fahrzeugs mindestens ein Profil festgeklebt ist, ergibt sich ohne weiteres Zutun eine Zentrierung des Dachmoduls im abgesenkten Bereich des Adapterträgers. Im Regelfall wird man hierzu auf beiden Fahrzeugseiten identische Profile einsetzen. Allerdings kann man auf den beiden Fahrzeugseiten links und rechts auch Profile mit unterschiedlicher Elastizität und Ausdehnung in Fahrzeugquerrichtung wählen.

Das Festkleben der elastischen Profile erfolgt bezogen auf die Fahrzeuglängsrichtung vorne im Bereich des vorderen Dachrahmens und/oder hinten im Heckscheibenbereich. Ragt, bezogen auf die Fahrzeuglängsrichtung, die äußere Seitenwand des Adapterträgers mit ihrem Innenflansch über das Dachmodul hinaus, so genügen zwei Profile. Dies deshalb, weil zwischen die beiden hinausragenden Innenflansche eine zum Beispiel pneumatisch betriebene Vorrichtung zur Positionierung des Dachmoduls in Fahrzeugquerrichtung eingeklemmt sein kann.

Gemäß einer Ausführungsform wird ein Profil mit einem selbstklebenden Bereich eingesetzt. In diesem Fall wird zumindest ein Teil des Profils auf praktische Weise mit dem selbstklebenden Bereich an den Außenflansch festgeklebt.

Eine weitere Ausführungsform sieht vor, auf beiden Fahrzeuglängsseiten zwei elastische Profile am jeweiligen Außenflansch des Dachmoduls oder dem zugehörigen Innenflansch festzukleben. Auf diese Weise lässt sich das Dachmodul mit einfachsten Mitteln entlang seiner gesamten Länge quer zur Fahrzeugrichtung zentrieren.

Ferner sieht eine Ausführungsform des Verfahrens den Einsatz eines Profils mit einer Dichtlippe vor. Die Dichtlippe und der am Dachmodulaußenflansch (oder am Innenflansch) klebende Bereich des Profils können bei Blick in Fahrzeuglängsrichtung die Form des Buchstabens "V" annehmen. Wird bei der Montage das Dachmodul in die Karosserieöffnung eingefahren, so verläuft durch die Spitze des "V" eine Schwenkachse in Fahrzeuglängsrichtung, um die ein Schenkel gegen den anderen Schenkel verschwenkt und vom Dachmodul zusammengedrückt wird, wobei es sich an den Innenflansch des Adapterträgers anlegt. Wird das Profil am Dachmodulaußenflansch angeklebt, so befindet sich die Spitze des "V" unten. Wird das Profil am Innenflansch angeklebt, so ist die Spitze des "V" oben.

Bei einer anderen Ausführungsform des Verfahrens wird ein geschlossenes V-förmiges Profil, beispielsweise ein V-förmiges Hohlprofil, am Außenflansch des Dachmoduls oder am zugehörigen Innenflansch festgeklebt. Hier gelten die Ausführungen des oberen Absatzes sinngemäß.

Eine Ausführungsform des Verfahrens sieht ferner den Einsatz eines Profils aus Gummi (Naturgummi oder Kunstgummi) vor, beispielsweise auch aus Ethylen-Propylen-Dien-Kautschuk (EPDM).

Ein weiterer Aspekt der Erfindung bezieht sich auf eine Verwendung eines elastischen Profils zur Zentrierung eines Dachmoduls eines Kraftfahrzeugs in Fahrzeugquerrichtung. Die Zentrierung kann hierbei wie oben beschrieben beim Einbau des Dachmoduls in einen Adapterträgers erfolgen, der auf dem dachtragenden Rahmen eines Kraftfahrzeugs aufgesetzt ist.

Weitere Merkmale und Vorteile der beanspruchten Erfindung werden aus der folgenden detaillierten Beschreibung mit Bezug auf die beigefügten Zeichnungen erkennbar, die nachfolgend als nicht beschränkende Beispiele angegeben sind. Hierbei soll die Benutzung von Bezugszeichen in den Figuren nicht dahingehend verstanden werden, dass die Bezugszeichen den Schutzumfang der beanspruchten Erfindung einschränken sollen. Es zeigt:
- Fig. 1: in einer perspektivischen Draufsicht eine Fahrzeugkarosserie mit einem der Aufnahme eines Dachmoduls dienenden Adapterträger;
- Fig. 2: in einer perspektivischen Draufsicht die Fahrzeugkarosserie mit Adapterträger und darin eingelassenem Dachmodul;
- Fig. 3: einen Schnitt entlang der der Linie A-A der Figur 2 mit Blick in Richtung der zugehörigen Pfeile;
- Fig. 4: einen Schnitt entsprechend zu Fig. 4, bei der das Profil am Innenflansch des Adapterträgers festgeklebt ist.

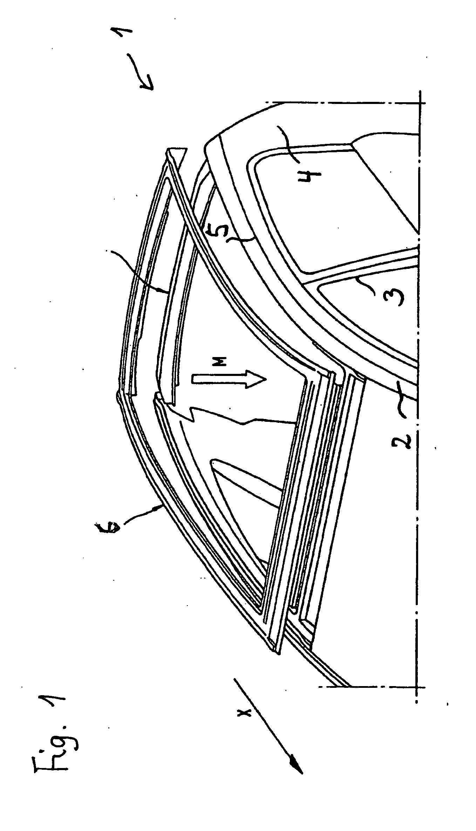

Die aus der DE 103 55 656 A1 entlehnte Fig. 1 zeigt eine Kraftfahrzeugkarosserie 1 mit drei Hochstreben 2, 3 und 4 in Gestalt einer A-Säule 2, einer B-Säule 3 und einer C-Säule 4. Der Pfeil x deutet die Fahrzeuglängsrichtung an. An den oberen Enden der Hochstreben 2, 3 und 4 befindet sich ein dachtragender Rahmen 5. Oberhalb des dachtragenden Rahmens 5 ist ein Adapterträger 6, der bei der Montage in Richtung des Pfeils M abgesenkt, auf den dachtragenden Rahmen 5 aufgesetzt und mit diesem verbunden wird.

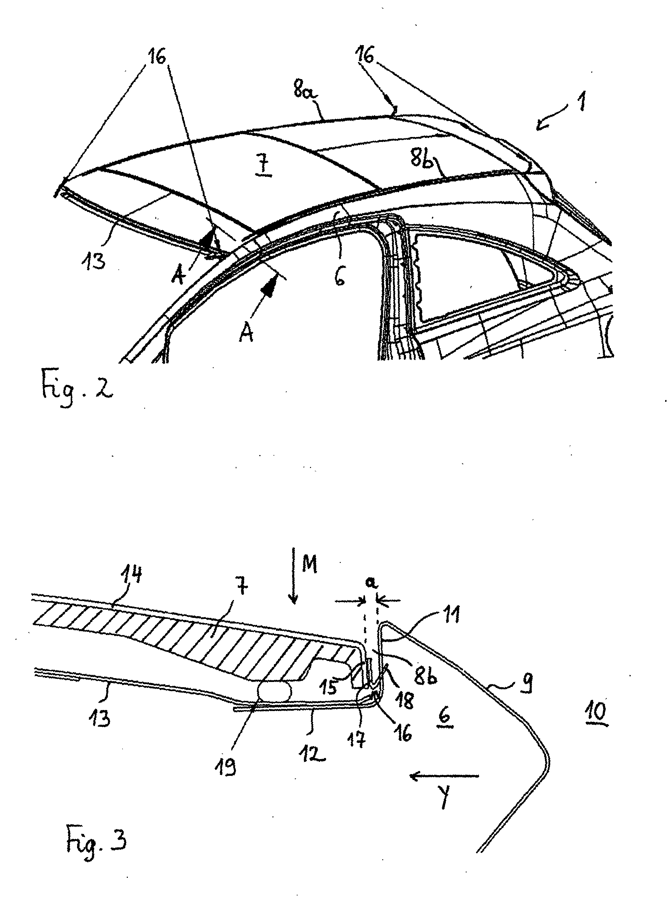

Fig. 2 zeigt eine zu Fig. 1 entsprechende Fahrzeugkarosserie 1 mit einem in den Adapterträger 6 eingelassenen Dachmodul 7. Adapterträger 6 und Dachmodul 7 sind dabei so bemessen, dass sich im eingebauten Zustand des Dachmoduls 7 eine in Fahrzeuglängsrichtung x ausgerichtete Fuge 8a bzw. 8b einstellt, deren in Fahrzeugquerrichtung gemessene Fugenbreite a maximal 5 mm beträgt.

In Fig. 2 ist weiterhin ein Schnitt A-A mittels einer Schnittlinie angedeutet, wobei die an der Schnittlinie dargestellten Pfeile die Blickrichtung auf die Schnittfläche angibt. Die Blickrichtung verläuft entgegengesetzt der Fahrzeuglängsrichtung. Der angedeutete Schnitt ist in Fig. 3 dargestellt.

In Fig. 3 erkennt man zunächst die äußere Seitenwand 9 des Adapterträgers 6, die diesen zur Fahrzeugaußenseite 10 hin abgrenzt. Die äußere Seitenwand 9 bzw. der Adapterträger 6 verfügen über einen zum vertikalen Innenflansch 11, der an seinem unteren Ende in einen horizontalen Auflageflansch 12 übergeht. Der Auflageflansch 12 ist mit dem vorderen Dachrahmen 13 verschweißt.

Der vertikale Innenflansch 11 und der Auflageflansch 12 definieren einen abgesenkten Bereich des Adapterträgers 6, in den das Dachmodul 7 bei der Montage entlang der Vertikalen, d.h. in Richtung des Pfeils M, abgesenkt wird. Das mit einer harten Folie 14 überzogene Dachmodul 7 besitzt seinerseits einen vertikalen Dachmodulaußenflansch 15. Im abgesenkten Zustand des Dachmoduls 7 befindet sich zwischen dem Innenflansch 11 und dem Dachmodulaußenflansch 15 die Fuge 8b. Die in Fahrzeugquerrichtung, also entlang des Pfeils y gemessene Fugenbreite a dieser Fuge beträgt etwa 3 mm. Es ist anzumerken, dass der Pfeil y zur Fahrzeugmitte zeigt.

Der Fachmann wird anhand der obigen Ausführungen erkennen, dass die jeweilige Vertikalität von Innenflansch 11 und Dachmodulaußenflansch 15 sowohl allgemein als auch in diesem Ausführungsbeispiel nicht streng erfüllt sein muss. Der Begriff "vertikal" ist insofern weit auszulegen und kann auch Fälle umfassen, bei denen die Fuge 8b eher keilförmig ausgebildet ist.

In der Fuge 8b befindet sich ein bei der Montage des Dachmoduls 7 eingesetztes Profil 16 aus EPDM. Das aus Gründen der Anschaulichkeit in Relation zum Adapterträger 6 nicht maßstäblich gezeichnete Profil 16 hat eine V-förmige Form. Ein erster Schenkel 17 dieses V-Profils besitzt einen selbstklebenden Bereich, mit dem er vor dem Absenken in den abgesenkten Bereich am Dachmodulaußenflansch 15 festgeklebt wird.

Nach dem Festkleben des V-Profils am Dachmodulaußenflansch 15 wird dieser in Fahrzeuglängsrichtung x ausgerichtet. Wird das Dachmodul 7 nach seinem Ausrichten in Richtung des Pfeils M abgesenkt, so legt sich der zweite Schenkel, d.h. die Dichtlippe 18, an den Innenflansch 11 an und wird gleichzeitig zusammengedrückt. Dasselbe geschieht auf der linken Fahrzeugseite in der Fuge 8a.

Während des Absenkens sorgen auf die genannte Weise identische Profile in beiden Fugen 8a und 8b für eine Selbstzentrierung des Dachmoduls 7 im Adapterträger 6 in Fahrzeugquerrichtung. Dies geschieht deshalb, weil sich das Dachmodul 7 in eine Position bewegen wird, in der der Druck in beide Richtungen quer zur Fahrzeuglängsrichtung x gleich sein wird. Dies gewährleistet gleich breite Fugen 8a und 8b bzw. ein symmetrisches Fugenbild. Bei hinreichendem Absenken in Richtung der Vertikalen bzw. des Pfeils M sorgt dann auf übliche Weise eine Klebemasse 19, beispielsweise in der Form einer Kleberaupe, für eine Fixierung des Dachmoduls 7 relativ zum Adapterträger 6.

Abhängig von der jeweiligen Fahrzeugkarosserie 1 kann es genügen, insgesamt zwei oder vier Profile 16 einzusetzen. Werden nur zwei Profile 16 verwendet, so beispielsweise im Fahrzeugdachbereich vorne links und rechts, d.h. im Bereich des vorderen Dachrahmens 13. Im hinteren Fahrzeugbereich muss dann die Ausrichtung des Dachmoduls anderweitig erfolgen. Steht beispielsweise im hinteren Fahrzeugbereich die äußere Seitenwand 9 in Fahrzeuglängsrichtung x über das Dachmodul 7 über, so kann eine zwischen den äußeren Seitenwänden 9 eingeklemmte Vorrichtung die Zentrierung des Dachmoduls vornehmen.

Es ist jedoch auch stets möglich, insgesamt vier Profile 16 einzusetzen. Diese können bezogen auf das Dachmodul 7 vorne links und rechts sowie hinten links und rechts angeordnet werden, wie es die Fig. 1 zeigt.

In allen Fällen bietet es sich an, das Profil jeweils aus der Fuge herausragen zu lassen bzw. so anzuordnen, dass es in Fahrzeuglängsrichtung über das Dachmodul übersteht. Nach erfolgtem Absenken des Dachmoduls 7 und Fixierung von dessen Position mit den Klebemassen 19 werden dann die Profile in Fahrzeuglängsrichtung herausgezogen.

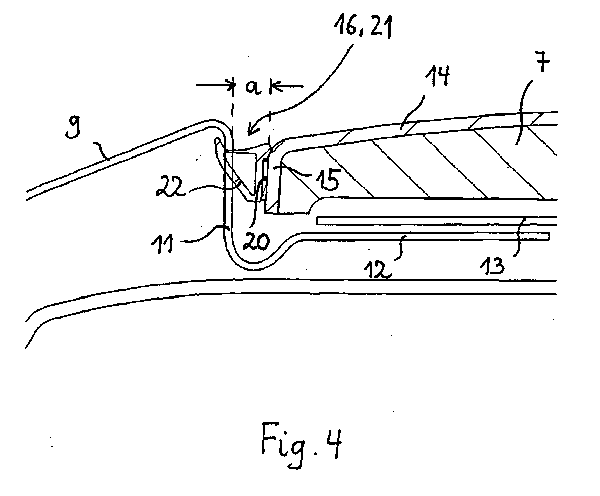

Fig. 4 zeigt einen Schnitt entsprechend für die andere Fahrzeugseite, bei das Profil 16 in einem Befestigungsbereich 20 des Dachmodulaußenflansches 15 festgeklebt wird. Das Profil 16 ist hierbei als V-förmiges Hohlprofil 21 ausgebildet. Die Spitze des V liegt hierbei unten, sodass sich beim Absenken des Dachmoduls 7 nach unten der Schenkel 22 des V an den Innenflansch 11 anlegt. Alternativ befindet sich der Befestigungsbereich 20 des Hohlprofils 21 wie in Figur 3 am Innenflansch 11. In diesem Fall liegt allerdings die Spitze des V oben und nicht unten.

### Bezugszeichenliste

- 01: Fahrzeugkarosserie
- 02: A-Säule
- 03: B-Säule
- 04: C-Säule
- 05: dachtragender Rahmen
- 06: Adapterträger
- 07: Dachmodul
- 8a: Fuge
- 8b: Fuge
- 09: äußere Seitenwand
- 10: Fahrzeugaußenseite
- 11: Innenflansch
- 12: Auflageflansch
- 13: vorderer Dachrahmen
- 14: Folie
- 15: Dachmodulaußenflansch
- 16: Profil
- 17: Schenkel
- 18: Dichtlippe
- 19: Klebemasse
- 20: selbstklebender Bereich
- 21: Hohlprofil

- M: Pfeil
- x: Fahrzeuglängsrichtung
- y: Fahrzeugquerrichtung
- a: Fugenbreite

## Patentansprüche

1. Verfahren zum Einbauen eines Dachmoduls (7) in einen Adapterträger (6), der auf einen dachtragenden Rahmen (5) eines Kraftfahrzeugs aufgesetzt ist, umfassend die folgenden Schritte:
a) Festkleben eines elastischen Profils (16) auf
a1) einen ersten und einen gegenüberliegenden zweiten Dachmodulaußenflansch (15),
und/oder
a2) einen ersten und einen gegenüberliegenden zweiten Innenflansch (11) des Adapterträgers,
wobei die Innenflansche in Fahrzeuglängsrichtung ausgerichtet sind,
b) Ausrichten sowohl des ersten als auch des zweiten Dachmodulaußenflansches in Fahrzeuglängsrichtung (x),
c) Absenken des Dachmoduls in den Adapterträger unter Einklemmen der Profile zwischen den Dachmodulaußenflanschen und den jeweiligen zugeordneten Innenflanschen (11) des Adapterträgers, **dadurch gekennzeichnet, dass** das Verfahren den folgenden weiteren Schritt umfasst:
d) Herausziehen der Profile nach dem Absenken des Dachmoduls aus der Fuge.

2. Verfahren nach Anspruch 1, bei dem ein Profil mit einem selbstklebenden Bereich (20) eingesetzt wird.

3. Verfahren nach einem der vorherigen Ansprüche, bei dem auf beiden Fahrzeuglängsseiten zwei elastische Profile festgeklebt werden.

4. Verfahren nach einem der vorherigen Ansprüche, bei dem die Länge des Profils so gewählt wird, dass es in Fahrzeuglängsrichtung über das Dachmodul übersteht.

5. Verfahren nach einem der vorherigen Ansprüche, bei dem ein Profil mit einer Dichtlippe (18) gewählt wird, die sich beim Absenken des Dachmoduls in den Adapterträger an den Innenflansch anlegt und dort zusammengedrückt wird.

6. Verfahren nach einem der vorherigen Ansprüche, bei dem ein offenes V-Profil (17,18) oder als V-förmiges Hohlprofil (21) festgeklebt wird.

7. Verfahren nach einem der vorherigen Ansprüche, bei dem ein Profil aus Gummi oder EPDM eingesetzt wird.

## Claims

1. A method for the installation of a roof module (7) in an adapter carrier (6), which is placed on a roof-supporting frame (5) of a motor vehicle, comprising the following steps:
a) tightly gluing an elastic profile (16) on
a1) a first and an oppositely disposed second outer flange (15) of the roof module, and/or
a2) a first and an oppositely disposed second inner flange (11) of the adapter carrier , with the inner flanges being aligned in the longitudinal direction of the vehicle;
b) alignment both of the first and also the second outer flange of the roof module in the longitudinal direction (x) of the vehicle;
c) lowering of the roof module into the adapter carrier by clamping the profiles between the outer flanges of the roof module and the respectively associated inner flanges (11) of the adapter carrier, **characterized in that** the method comprises the following further step:
d) pulling out the profiles after lowering the roof module out of the gap.

2. A method according to claim 1, wherein a profile with a self-adhesive area (20) is inserted.

3. A method according to one of the preceding claims, wherein two elastic profiles are tightly glued onto the two longitudinal sides of the vehicle.

4. A method according to one of the preceding claims, wherein the length of the profile is chosen in such a way that it protrudes beyond the roof module in the longitudinal direction of the vehicle.

5. A method according to one of the preceding claims, wherein a profile with a sealing lip (18) is chosen, which sits close to the inner flange in the adapter carrier during lowering of the roof module and is compressed there.

6. A method according to one of the preceding claims, wherein an open V-profile (17, 18) or a V-shaped hollow profile (21) is tightly glued.

7. A method according to one of the preceding claims, wherein a profile made of rubber or EPDM is used.

## Revendications

1. Procédé pour le montage d'un module de toit (7) dans un support adaptateur (6) posé sur un cadre portant le toit (5) d'un véhicule à moteur, comprenant les étapes suivantes :
a) fixation par collage d'un profilé élastique (16) sur
a1) une première bride extérieure de module de toit (15) et une deuxième qui lui fait face, et/ou
a2) une première bride intérieure (11) du support adaptateur et une deuxième qui lui fait face, ces brides intérieures étant orientées dans le sens longitudinal du véhicule ;
b) orientation de la première bride extérieure de module de toit et de la deuxième dans le sens longitudinal du véhicule (x),
c) abaissement du module de toit dans le support adaptateur en coinçant les profilés entre les brides extérieures de module de toit et les brides intérieures (11) correspondantes du support adaptateur,
**caractérisé en ce que** le procédé comprend en outre l'étape suivante :
d) extraction des profilés hors du joint après l'abaissement du module de toit.

2. Procédé selon la revendication 1, dans lequel un profilé avec une zone autocollante (20) est inséré.

3. Procédé selon l'une des revendications précédentes, dans lequel deux profilés élastiques sont fixés par collage sur les deux côtés longitudinaux du véhicule.

4. Procédé selon l'une des revendications précédentes, dans lequel la longueur du profilé est choisie de telle manière qu'il dépasse dans le sens longitudinal du véhicule au-delà du module de toit.

5. Procédé selon l'une des revendications précédentes, dans lequel le profilé choisi possède une lèvre d'étanchéité (18) qui s'appuie sur la bride intérieure lors de l'abaissement du module de toit dans le support adaptateur et qui est comprimée à cet endroit.

6. Procédé selon l'une des revendications précédentes, dans lequel un profilé en V ouvert (17, 18) ou un profilé creux en forme de V (21) est fixé par collage.

7. Procédé selon l'une des revendications précédentes, dans lequel un profilé en caoutchouc ou en EPDM est inséré.
